# EUROPEAN PATENT APPLICATION

(11) **EP 4 714 810 A1**
(43) Date of publication of application: **25.03.2026**
(21) Application number: 24213077.1
(22) Date of filing: 14.11.2024
(51) Int. Cl.: B62J 6/028, B62J 6/045, B62J 6/24, B62J 45/414, G08G 1/00

(54) **MULTIFUNCTIONAL BICYCLE PILOT LAMP**

(30) Priority: 24.09.2024 CN 202411335983
(71) Applicant: SHENZHEN MANKA IOT ELECTRONICS CO., LTD., Shenzhen Guangdong 518000 (CN)
(72) Inventor: FU, Pan, Jinan (CN)
(74) Representative: Metida

(57) **Abstract**

The present invention discloses a multifunctional bicycle pilot lamp and relates to the technical field of bicycle lamps. The multifunctional bicycle pilot lamp includes a shell, a colorful lamp bead, an intelligent control module, a USB charging module, and a mobile application. The mobile application is wirelessly connected to the intelligent control module. The multifunctional bicycle pilot lamp provided by the present invention is intelligently controlled in a lower power consumption mode of wireless communication. Wireless control enables a user to operate various functions of lamp conveniently without complicated wired connections. Light for a plurality of group members can match with each other to flicker regularly, which is more eye-catching, thereby adding color and vitality to riding. A rider can select different colorful light modes according to his/her own preference to exhibit his/her personality and style. Moreover, the visibility is improved, so that the multifunctional bicycle pilot lamp further catches people's eyes to avoid a collision risk. Furthermore, the multifunctional bicycle pilot lamp has an obvious warning effect on a road with complex traffic. The cohesive force of a team is improved through the matching light, and the multifunctional bicycle pilot lamp can further help relax the mind, allowing the cyclist to enjoy the ride.

## Description

### FIELD OF TECHNOLOGY

The present invention relates to the technical field of bicycle lamps, and particularly relates to a multifunctional bicycle pilot lamp.

### BACKGROUND

Existing bicycle lamps on the market are mainly based on basic illuminating and warning functions and generally lack intelligent and interactive designs. A common bicycle lamp provides illumination through a simple LED lamp bead. Some high-end products have the function of manually adjusting the brightness or mode but cannot meet the requirements of users on diverse, intelligent, and personalized light effects. The existing bicycle lamps generally lack functions of riding safety warning, light control, an intelligent colorful mode, synchronous control of light scenes by forming a team, a warning reminder that team members join the team and are separated from the team, team social interaction, and the like. In addition, there are seldom products in the prior art capable of achieving synchronous control of a plurality of bicycle lamps, so that the products lack interactivity and entertainment.

### SUMMARY

An object of the present application is to provide a multifunctional bicycle pilot lamp to solve the problem proposed in the above background art.

In order to achieve the above object, the present application provides a multifunctional bicycle pilot lamp, including a shell, a colorful lamp bead, an intelligent control module, a USB charging module, and a mobile application, the mobile application being wirelessly connected to the intelligent control module.

Preferably, the intelligent control module has the following functions:
S1, achieving intelligent control of the colorful lamp bead in a lower power consumption mode of wireless communication;
S2, supporting a user to select different colorful light modes through the mobile application APP to enable the colorful lamp bead to exhibit different light effects according to settings;
S3, automatically turning on the colorful lamp bead during night riding to provide warning light, so as to ensure riding safety;
S4, automatically adjusting light brightness of the colorful lamp bead by using a light sensor to adapt to different illumination conditions;
S5, internally providing a gyroscope sensor to detect a brake speed, where when braking is detected, the colorful lamp bead automatically flickers with red light and flashes to enhance the riding safety at night and remind rear vehicles to pay attention;
S6, internally providing an electric quantity detection module, where when an electric quantity is lower than a preset value, the colorful lamp bead automatically displays a reminding color to remind the user to charge timely; and
S7, internally providing a vibration sensor to detect a vibration amplitude of a bicycle, where the colorful lamp bead automatically displays a specified reminding color to remind following members to decelerate.

Preferably, the mobile application has the following functions:
A1, binding a device and examining team members by the user through the mobile application;
A2, achieving functions of automatically forming a team without a password and specially forming a team by inputting a password;
A3, providing various interesting colorful light shows;
A4, synchronizing light scenes for the team members in a lower power consumption mode of wireless communication to enhance an overall visual effect of a riding team;
A5, when a team member joins the team or is away from and separated from the team, sending, by the colorful lamp bead, a corresponding light signal to remind other members to pay attention, so as to enhance a cooperative engagement capability of the team; and
A6, supporting the user to interact with teammates to share riding experience and light settings, so as to enhance social attributes and enjoyments of riding.

To sum up, the present invention has the following technical effects and advantages:
1, The multifunctional bicycle pilot lamp provided by the present invention is reasonable in structure. User-customized various colorful light modes are achieved through the set wireless low power mode and the intelligent control module, so that the riding enjoyment and personality are improved;
   the multifunctional bicycle pilot lamp has the automatic warning function and the brake reminding function to effectively enhance the night riding safety;
   the light brightness is automatically adjusted according to the intensity of the environmental light through the light sensor, so that the optimum illumination effect is provided;
   a plurality of bicycle lamps are synchronously controlled in the wireless power manner and flicker in the colorful light mode synchronously, so that the overall effect, enjoyment, and interactivity of the riding team are improved;
   when the electric quantity is lower than the preset value, the multifunctional bicycle pilot lamp automatically reminds the user to charge, so that the potential safety hazard caused by sudden turn-off of the light is avoided;
   the user can bind the device through the mobile application to manage the team members, so as to provide more convenient and intelligent usage experience.

### BRIEF DESCRIPTION OF THE DRAWINGS

In order to describe the embodiments of the present application or the technical solutions in the prior art more clearly, drawings needed to be used in the embodiments or the prior art will be briefly introduced below. It is apparent that the drawings described below are merely some embodiments of the present application, and those skilled in the art can further obtain other drawings according to the drawings without making creative efforts.
FIG. 1 is a schematic structural diagram of a whole of the present invention from a first perspective;
FIG. 2 is a schematic structural diagram of a whole of the present invention from a second perspective;
FIG. 3 is a schematic diagram of a battery charging management circuit of the present invention; and
Fig. 4 is a schematic diagram of a working principle of an intelligent control module in the present invention.

In the figures, 1, shell; 2, colorful lamp bead.

### DESCRIPTION OF THE EMBODIMENTS

In order to make the objectives, technical solutions and advantages of the present invention more clear, the technical solutions in the present invention will be clearly and completely described below in conjunction with the drawings in the present invention, and apparently, the described embodiments are some examples rather than all embodiments of the present invention. On the basis of the embodiment in the present invention, all other embodiments obtained by those of ordinary skill in the art without creative efforts fall into the scope of protection of the present invention.

It is to be noted that in the description of the embodiment of the present invention, orientation or position relations indicated by terms "upper", "lower", "front", "left", "right", "vertical", "horizontal", "top", "bottom", "inner" and "outer", and etc. are orientation or position relations based on the drawings and are only used for convenient description of the present invention and simplification of the description rather than indicates or implies that the indicated devices or components must have specific orientations and are configured and operated in the specific orientations. Therefore, it cannot be construed as limitations to the embodiment of the present invention. In addition, the terms "first", "second" and "third" are for descriptive purposes only and should not be construed as indicating or implying relative importance.

In the description of the embodiment of present invention, it should be noted that unless expressly specified and defined otherwise, the terms "mount", "connect", "connected", etc. are to be construed broadly and, for example, may be fixedly connected, or detachably connected, or integrally connected, may be mechanically connected, or electrically connected, and may be directly connected, or indirectly connected by means of an intermediary medium. Those of ordinary skill in the art may understand the specific meanings of the foregoing terms in the embodiment of the present invention according to specific situations.

In the embodiment of the present invention, unless otherwise expressly specified and limited, a first feature being "on" or "under" a second feature may mean that the first feature makes direct contact with the second feature or that the first feature makes indirect contact with the second feature by means of an intermediary medium. Further, a first feature being "over," "above," and "on" a second feature may mean that the first feature is directly above or obliquely above the second feature, or simply mean that the first feature is higher than the second feature. The first feature being "below," "under," and "beneath" the second feature may mean that the first feature is directly below or diagonally below the second feature, or simply mean that the first feature is lower than the second feature.

In the description of this specification, the description of the reference terms "an embodiment", "some examples", "an example", "a specific example", "some examples", and the like means that specific features, structures, materials or characteristics described in combination with the example(s) or example(s) are included in at least one example or example of the embodiment of the present invention. In this specification, schematic descriptions of the above terms are not necessarily directed at the same embodiment or example. Furthermore, specific features, structures, materials or characteristics described can be combined in any one or more embodiments or exemplary embodiments in proper manners. In addition, under a condition without mutual contradiction, those skilled in the art can integrate or combine different embodiments or exemplary embodiments with different embodiments or exemplary embodiments described in the description.

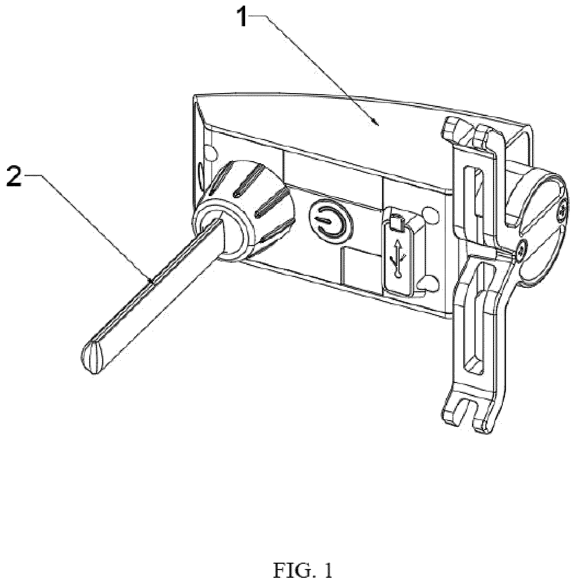

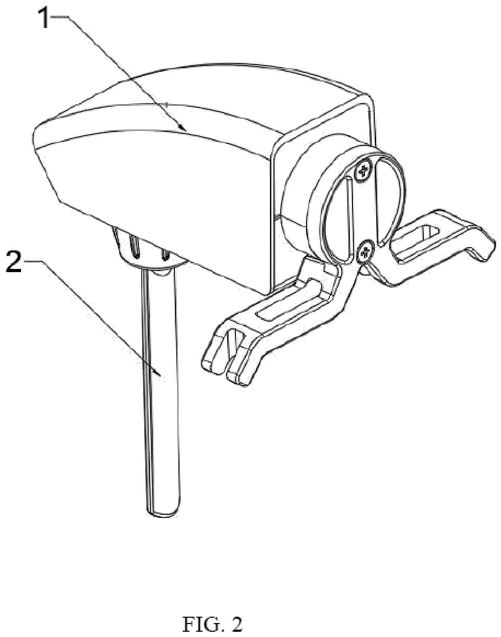

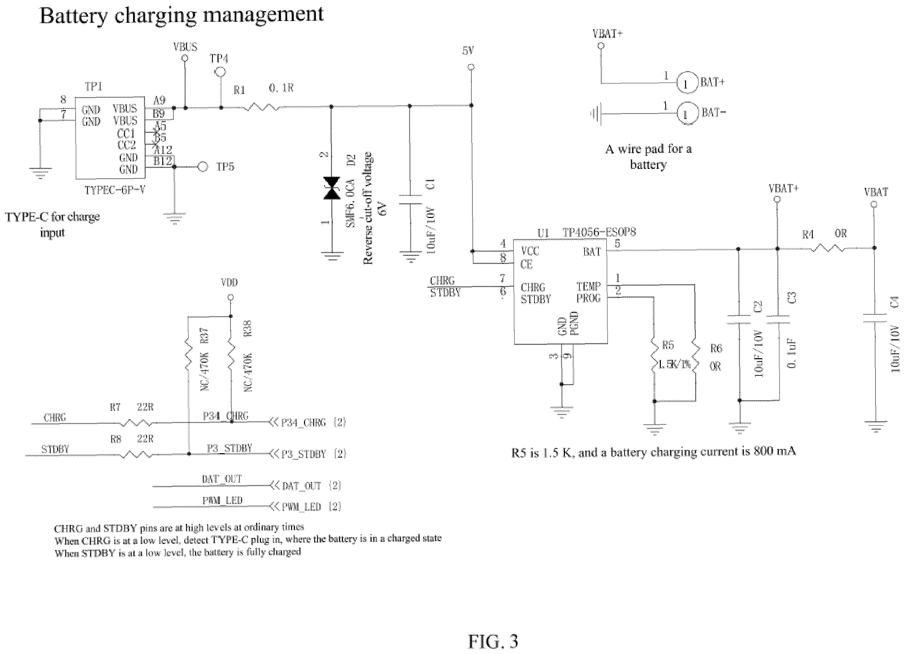

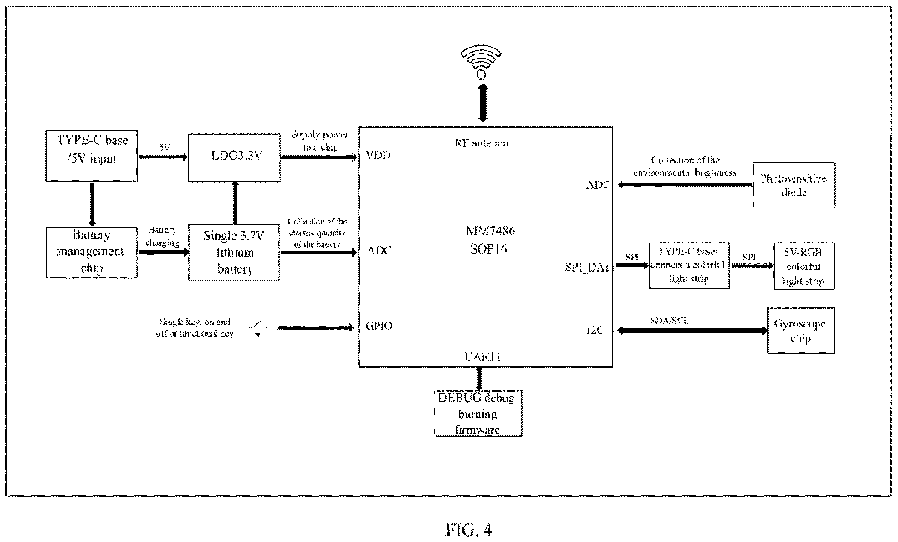

Embodiment: a multifunctional bicycle pilot lamp shown in FIGs. 1-4 includes a shell 1, a colorful lamp bead 2, an intelligent control module, a USB charging module, and a mobile application, where the device charging method and circuit connection all are prior art, which are not described in detail. The colorful lamp bead 2 is of a double-sided lamp panel structure with dense colorful lamp beads. The mobile application is wirelessly connected to the intelligent control module. The intelligent communication module, a light sensor, a gyroscope sensor, an electric quantity detection module, and the like are integrated in the intelligent control module to control the colorful lamp bead 2 intelligently. The mobile application includes an APP and a WeChat small program. A user can bind a device through the APP or the WeChat small program downloaded through systems such as iOS and Android to examine team members. The mobile application is in signal connection to the intelligent control module in a wireless communication manner. The user performs operations on the mobile application, for example, instructions such as binding the device, selecting the light mode, and forming the team, and the instructions are sent to the intelligent control module through a wireless network. Upon receiving the instructions, the intelligent control module executes corresponding operations and feeds state information of the device to the mobile application to achieve bidirectional signal interaction.

The shell 1 is fixedly provided with a clamping board clamped to the bicycle. The clamping board can be fixed to the bicycle by matching with a bolt, so that it can be fixed and used by installation personnel;
it is worth noting that the user can install the device on the bicycle more stably by arranging the clamping board and the bolt, and the stable connection through the bolt can prevent the overall lamp from being separated in the riding process, so that the fixing effect is good;
the shell 1 is made of a high strength plastic material with unique textures and gloss, which shows a certain sense of design while guaranteeing the durability, thereby adding a fashionable element to the bicycle. It is ensured that the shell can protect a lamp panel and electronic components inside the shell and enhance the aesthetic degree of the bicycle;
the double-sided lamp panel with dense colorful lamp beads is installed inside the shell to ensure the position and angle of the colorful lamp bead 2 can provide the optimum illuminating and warning effects;
the USB charging module is connected to the intelligent control module and the double-sided lamp panel with dense colorful lamp beads, which enables the user to charge the pilot lamp conveniently.

In the using process, the user can select different colorful light modes through the smart mobile APP to share the riding enjoyment. During night riding, the colorful lamp bead 2 will automatically enable the warning function to ensure the riding safety. The light sensor will automatically adjust the light brightness according to the illumination condition of the ambient environmental, so that the electric quantity is saved. When braking is detected, the colorful lamp bead 2 will automatically flicker with red light and flash to remind rear vehicles to pay attention. The electric quantity detection module will monitor the electric quantity in real time. When the electric quantity is lower than a preset value, the colorful lamp bead 2 automatically displays a reminding color to remind the user to charge timely.

The intelligent control module has the following functions:
S1, achieving intelligent control of the colorful lamp bead (2) in a lower power consumption mode of wireless communication;
it is worth noting that intelligent control is achieved in the lower power consumption manner of wireless communication, so that the energy consumption is reduced, and the service time of the device is prolonged; moreover, wireless control enables the user to operate various functions of the lamp more conveniently without complicated wired connections;
S2, supporting a user to select different colorful light modes through the mobile application to enable the colorful lamp bead 2 to exhibit different light effects according to settings;
S3, automatically turning on the colorful lamp bead 2 during night riding to provide warning light, so as to ensure riding safety;
S4, automatically adjusting light brightness of the colorful lamp bead 2 by using a light sensor to adapt to different illumination conditions;
it is worth noting the intelligent control module is connected to the light sensor through a circuit, the light sensor detects the illumination intensity of the ambient environment in real time and converts illumination information into an electric signal and transmits the electric signal to the intelligent control module; the intelligent control module analyzes a current illumination condition according to the received signal and then sends a corresponding control signal to the colorful lamp bead 2 to adjust the light brightness, so as to adapt to different illumination environments;
S5, internally providing a gyroscope sensor to detect a brake speed, wherein when braking is detected, the colorful lamp bead 2 automatically flickers with red light and flashes to enhance the riding safety at night and remind rear vehicles to pay attention;
it is worth noting the gyroscope sensor is also connected to the intelligent control module through a circuit; the gyroscope sensor can detect the motion states of the bicycle, such as the brake speed, convert the information into the electric signal and transmit the electric signal to the intelligent control module; when receiving a brake signal, the intelligent control module will send an instruction to the colorful lamp bead 2 immediately, so that the colorful lamp bead automatically flickers with the red light and flashes to provide a significant warning effect to rear vehicles, which greatly improves the night riding safety;
S6, internally providing an electric quantity detection module, where when an electric quantity is lower than a preset value, the colorful lamp bead 2 automatically displays a reminding color to remind the user to charge timely; and the method for monitoring the electric quantity by the electric quantity detection module is the prior art, which is not described in detail;
it is worth noting that the electric quantity detection module is arranged to detect the electric quantity in real time; and when the electric quantity is low, a reminder will be given to prevent a condition that the lamp fails and cannot be used as the electric quantity is exhausted without the reminder or a late reminder;
S7, internally providing a vibration sensor, where the vibration sensor matches with the intelligent control module and the colorful lamp bead 2 to detect a vibration amplitude of the bicycle, and the colorful lamp bead 2 automatically displays a specified reminding color to remind following members to decelerate;
before riding, the reminding color of the colorful lamp bead 2 when the bicycle vibrates can be set in advance; during night riding, the vibration sensor will send the signal to the intelligent control module when the bicycle encounters pit holes, bumps or other sudden vibrations, and the intelligent control module receiving the signal will control the colorful lamp bead 2 to display the specified reminding color, so as to remind the following members;
it is worth noting that when the bicycle encounters pit holes, bumps or other sudden vibrations, the automatically turned light can attract attention of the rider himself/herself, so that he/she has the time to adjust the riding posture and speed to prevent accidents due to unbalance; moreover, it also can warn surrounding people to prevent others from getting close unknowingly.

The mobile application has the following functions:
A1, binding a device and examining team members by the user through the mobile application;
A2, achieving functions of automatically forming a team without a password and specially forming a team by inputting a password;
when the user selects the function of automatically forming a team without a password through the mobile application, the mobile application sends a team forming request signal to the intelligent control module, and the intelligent control module communicates with the intelligent control modules of other pilot lamps in a low power consumption manner of wireless communication to achieve signal connection and light scene synchronization among the team members;
A3, providing various interesting colorful light shows;
it is worth noting that light for a plurality of group members can match with each other to flicker regularly, which is more eye-catching, thereby adding color and vitality to riding; a rider can select different colorful light modes according to his/her own preference to exhibit his/her personality and style; moreover, the visibility is improved, so that the multifunctional bicycle pilot lamp further catches people's eyes to avoid a collision risk; furthermore, the multifunctional bicycle pilot lamp has an obvious warning effect on a road with complex traffic; the cohesive force of a team is improved through the matching light, and the multifunctional bicycle pilot lamp can further help relax the mind, allowing the cyclist to enjoy the ride;
A4, synchronizing light scenes for the team members in a lower power consumption mode of wireless communication to enhance an overall visual effect of a riding team;
A5, when a team member joins the team or is away from and separated from the team, sending, by the colorful lamp bead (2), a corresponding light signal to remind other members to pay attention, so as to enhance a cooperative engagement capability of the team;
a distance d is estimated by a team leader and the members according to the intensity of the signal received by the mobile application;
the distance is divided into different intervals, and each interval corresponds to a special light color; for example, three distance intervals can be set: a near distance interval 0, d1, a middle distance interval d1, d2, and a far distance interval d2, +∞; and different colors are set for the intervals, for example, red R is displayed for the near distance, yellow Y is displayed for the middle distance, and green G is displayed for the far distance;
the intelligent control module receives a distance value d transmitted by a distance detection device and determines the distance interval according to the distance value, specifically as follows: 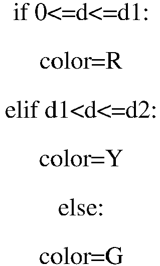
where d is the distance value measured, d1 and d2 are boundary values of the set distance interval, and R, Y, and G respectively represent red, yellow, and green;
corresponding control signals are sent to the colorful lamp bead 2, the colorful lamp bead 2 displays corresponding colors according to the control signals to remind the distances between the team members and the team leader and decelerate or accelerate timely to shorten the distances, so as to the team members from falling behind, and moreover, when the team members fall behind, the leader will receive information; when the team members fall behind within 5 minutes and do not return to connect, the colorful lamp bead will remind repeatedly;
it is worth noting that the team members can know the distances between themselves and the team leader. In emergencies, such as obstacles on roads and overtaking severe weather, the team leader can make a decision timely and inform nearby team members to take corresponding actions; the team members also can determine whether they can be supported by the team leader fast according to the distances, so that the ability to cope with risks is improved; and moreover, the riding speeds of the team members are adjusted to prevent the team members from falling behind due to a low speed; particularly under the circumstance of a complex terrain or an unfamiliar route, keeping a proper distance can ensure the team members are with a range of visibility of the team, so that the risk of being lost and missing is reduced; and when there are team members getting hurt or having an accident, knowing the distances between the team members and the team leader can enable other team members to organize rescue more efficiently; the team leader can allocate a rescue resource reasonably according to the distances and rushes to the scene as soon as possible to strive for precious rescue time for the wounded, and the team members can know that they are members of the team constantly, which also plays a certain role of enhancing the cohesive force of the team; and
A6, supporting the user to interact with teammates to share riding experience and light settings, so as to enhance social attributes and enjoyments of riding.

It shall be noted finally that the above is merely preferred embodiments of the present invention and is not limitation to the present invention. Although detailed description is made on the present invention with reference to the embodiments, those skills in the art still can modify the technical solutions recorded by the embodiments or replace part of technical characteristics equivalently. Any modification, equivalent substitution, improvement and the like made within the spirit and principle of the present invention shall fall within the scope of protection of the prevent invention.

## Claims

1. A multifunctional bicycle pilot lamp, **characterized by** comprising a shell (1), a colorful lamp bead (2), an intelligent control module, a USB charging module, and a mobile application, the mobile application being wirelessly connected to the intelligent control module.

2. The multifunctional bicycle pilot lamp according to claim 1, **characterized in that** the intelligent control module has the following functions:
S1, achieving intelligent control of the colorful lamp bead (2) in a lower power consumption mode of wireless communication;
S2, supporting a user to select different colorful light modes through the mobile application APP to enable the colorful lamp bead (2) to exhibit different light effects according to settings;
S3, automatically turning on the colorful lamp bead (2) during night riding to provide warning light, so as to ensure riding safety;
S4, automatically adjusting light brightness of the colorful lamp bead (2) by using a light sensor to adapt to different illumination conditions;
S5, internally providing a gyroscope sensor to detect a brake speed, wherein when braking is detected, the colorful lamp bead (2) automatically flickers with red light and flashes to enhance the riding safety at night and remind rear vehicles to pay attention;
S6, internally providing an electric quantity detection module, wherein when an electric quantity is lower than a preset value, the colorful lamp bead (2) automatically displays a reminding color to remind the user to charge timely; and
S7, internally providing a vibration sensor to detect a vibration amplitude of a bicycle, wherein the colorful lamp bead (2) automatically displays a specified reminding color to remind following members to decelerate.

3. The multifunctional bicycle pilot lamp according to claim 1, **characterized in that** the mobile application has the following functions:
A1, binding a device and examining team members by the user through the mobile application;
A2, achieving functions of automatically forming a team without a password and specially forming a team by inputting a password;
A3, providing various interesting colorful light shows;
A4, synchronizing light scenes for the team members in a lower power consumption mode of wireless communication to enhance an overall visual effect of a riding team;
A5, when a team member joins the team or is away from and separated from the team, sending, by the colorful lamp bead (2), a corresponding light signal to remind other members to pay attention, so as to enhance a cooperative engagement capability of the team; and
A6, supporting the user to interact with teammates to share riding experience and light settings, so as to enhance social attributes and enjoyments of riding.
